# EUROPEAN PATENT SPECIFICATION

(11) **EP 2 540 128 B1**
(45) Date of publication and mention of the grant of the patent: **11.12.2013**
(21) Application number: 11706532.6
(22) Date of filing: 25.02.2011
(51) Int. Cl.: H04W 72/04, H04W 52/02

(54) **SYSTEM AND METHOD FOR RESUMPTION OF TIMESLOT MONITORING**
SYSTEM UND VERFAHREN ZUR WIEDERAUFNAHME VON ZEITSCHLITZÜBERWACHUNG
SYSTÈME ET PROCÉDÉ DE REPRISE DE SURVEILLANCE DE CRÉNEAUX TEMPORELS

(30) Priority: 26.02.2010 US 308775 P
(43) Date of publication of application: 02.01.2013
(73) Proprietor: BlackBerry Limited, Waterloo, ON N2K 0A7 (CA)
(72) Inventor: HOLE, David Philip, North Baddesley Southampton SO52 9NP (GB)
(74) Representative: Greenaway, Martin William
(86) International application number: PCT/EP2011/052863
(87) International publication number: WO 2011/104371

(56) References cited:
- NOKIA CORPORATION ET AL: "Dynamic Timeslot Reduction", 3GPP DRAFT; GP-090825, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Shenzhen; 20090511, 6 May 2009 (2009-05-06), XP050414943, [retrieved on 2009-05-06]
- NOKIA CORPORATION ET AL: "Dynamic Timeslot Reduction", 3GPP DRAFT; GP-090266, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Malta; 20090216, 12 February 2009 (2009-02-12), XP050414554, [retrieved on 2009-02-12]
- NOKIA CORPORATION ET AL: "Dynamic Timeslot Reduction", 3GPP DRAFT; GP-100349, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Berlin; 20100301, 25 February 2010 (2010-02-25), XP050416687, [retrieved on 2010-02-25]
- NOKIA CORPORATION ET AL: "Dynamic Timeslot Reduction - Response to Questions in GP-090777", 3GPP DRAFT; GP-090934, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Shenzhen; 20090511, 13 May 2009 (2009-05-13), XP050415067, [retrieved on 2009-05-13]
- RESEARCH IN MOTION UK LTD: "Dynamic Timeslot Reduction", 3GPP DRAFT; GP-092175-CR44060-REL9-DYNAMIC TIMESLOT REDUCTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Sophia; 20091116, 12 November 2009 (2009-11-12), XP050416109, [retrieved on 2009-11-12]

## Description

### CROSS-REFERENCE TO RELATED APPLICATIONS

This application claims priority to U.S. Provisional Application No. 61/308,775 filed February 26, 2010, entitled "SYSTEM AND METHOD FOR RESUMPTION OF TIMESLOT MONITORING".

### BACKGROUND

The present disclosure relates generally to data transmission in mobile communication systems and, more specifically, to a system and method for the resumption of timeslot monitoring in, for example, dual-carrier downlink communication systems.

As used herein, the terms "mobile station" (MS), "user agent," and "user equipment" (UE) can refer to electronic devices such as mobile telephones, personal digital assistants (PDAs), handheld or laptop computers, and similar devices that have network communications capabilities. In some configurations, MS may refer to a mobile, wireless device. The terms may also refer to devices that have similar capabilities but that are not readily transportable, such as desktop computers, set-top boxes, or network nodes.

An MS may operate in a wireless communication network that provides for high-speed data communications. For example, the MS may operate in accordance with Global System for Mobile Communications (GSM) and General Packet Radio Service (GPRS) technologies. Today, such a MS may further operate in accordance with Enhanced Data rates for GSM Evolution (EDGE), or Enhanced GPRS (EGPRS) or Enhanced GPRS Phase 2 (EGPRS2).

To communicate with a network, an MS is configured to use a media access control (MAC) protocol to determine the uplink or downlink resources available for the MS. GPRS, for example, uses a timeslot structure similar to that of GSM, but where timeslots are dynamically allocated to MSs both for uplink and downlink transmissions. To communicate with a GPRS network, therefore, an MS may be configured to have a multi-slot capability that enables the MS to use between one (1) and eight (8) timeslots for data transfer. Because uplink and downlink channels are reserved separately, various multi-slot resource configurations may be assigned in different directions.

In some cases, an MS may be allocated timeslots on dual carriers. A dual carrier 'assignment' comprises a set of timeslots on two carriers. In the case of an uplink dual carrier assignment, the assignment includes the total set of timeslots on both carriers that may be used by the MS for uplink transmissions; in the case of a downlink dual carrier assignment, the assignment is the total set of timeslots on both carriers on which the network may send data to the MS.

For any given radio block period, the network dynamically allocates resources and determines upon which downlink timeslots or uplink timeslots the MS may receive and/or transmit data. In basic transmission time intervals (BTTI), a given radio block period includes 4 TDMA frames and each TDMA frame includes 8 timeslots. The allocation algorithm may be implementation dependent, but may take account of the MS's multislot class (the maximum number of timeslots on which the MS can transmit or receive, and the time required to switch from transmit to receive and vice versa), and may take account of the amount of data the base station controller (BSC) expects the MS to receive/transmit.

Reduced transmission time intervals (RTTI) can be used and is a modification to the above structure where, instead of a radio block being transmitted as four bursts with each block being sent in a particular timeslot over four TDMA frames, a radio block (containing essentially the same amount of information) is transmitted using two timeslots in two TDMA frames. This reduces the transmission time for a block and reduces the overall latency of the system. Accordingly, a "reduced radio block period" is 2 TDMA frames (approx. 10ms) compared with a basic radio block period, which is 4 TDMA frames (approx. 20ms).

Uplink allocations are signaled by the use of an uplink state flag (USF), which is a number between 0 and 7 (inclusive), and is signaled in downlink radio blocks. As part of the MS's uplink assignment, the MS is informed which USF(s) on which timeslot(s) indicate an uplink allocation for that MS. USFs are generally included in the headers of downlink blocks. In the case of RTTI, USFs may be coded across radio blocks across four TDMA frames, for example, in the same manner as downlink BTTI radio blocks are sent ("BTTI USF mode") or (using two timeslots) across two TDMA frames ("RTTI USF mode").

In some communication standards, there are "m" timeslots assigned for reception and "n" timeslots assigned for transmission. Thus, for a multislot class type 1 MS, there may be Min(m,n,2) reception and transmission timeslots with the same timeslot number. For a multislot class type 2 MS, there may be Min(m,n) reception and transmission timeslots with the same timeslot number. In the case of downlink dual carrier configurations, if timeslots with the same timeslot number are assigned on both channels, in calculating the value of m they may be counted as one timeslot. As a result, where both downlink and uplink timeslots are assigned, if assigned a single timeslot in one direction and one or more timeslots in the opposite direction, the timeslot number of the first timeslot may be the same as one of the timeslot(s) in the opposite direction. Similarly, if assigned two or more uplink timeslots and two or more downlink timeslots, at least two of the uplink and downlink timeslots may have a common timeslot number. As a result, in uplink+downlink assignments, the timeslots that may be monitored for USFs and downlink data blocks are largely co-incident. In some networks, assignments and allocations are essentially under the control of the network (for example, the BSC).

During an ongoing packet data session in GPRS, for example, an MS with an assigned downlink TBF (temporary block flow) is required to monitor all downlink timeslots in the MS's assignment in case the network sends the MS data in any of the allocated downlink timeslots. Similarly, if an MS has an assigned uplink TBF, the MS is required to monitor all timeslots on which the USF (uplink state flag) could be sent to dynamically allocate uplink resources. If an MS has both uplink and downlink TBFs, the MS must monitor as many relevant downlink timeslots as possible, taking into account any allocated uplink transmissions opportunities.

In the case that either the network or the MS has no data to send, and particularly when neither the network nor the MS has data to send, this monitoring activity results in significant wasted battery power in the MS. To minimize battery power consumption, the assigned resources (e.g., TBF) may be released, minimizing the number of timeslots that the MS must monitor. Unfortunately, such a release may lead to significant user-perceived delay when further data is to be sent between the network and the MS because new resources (e.g., TBF) must be established. Alternatively, an MS may unilaterally cease monitoring particular timeslot resources to minimize battery consumption (timeslot reduction). In that case, however, there is no existing mechanism for the MS to detect that the network has resumed data transmission on the timeslot resources that are not monitored by the MS. As a result, data transmissions from the network may not be received by the MS.

Accordingly, in a network implementation where an MS has reduced the number of timeslots that are being monitored, there is a need for a mechanism to trigger the MS to resume monitoring one or more of the assigned timeslots in case data is to be transferred between the network and the MS. Similarly, there is a corresponding need for a mechanism to trigger the MS to resume monitoring timeslots on which USFs may be sent to the MS.

The publication NOKIA CORPORATION ET AL: "Dynamic Timeslot Reduction", 3GPP DRAFT; GP-090825, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX; FRANCE, val. TSG GERAN, no. Shenzhen; 20090511, 6 May 2009 (2009-05-06), XP050414943, [retrieved on 2009-05-06] describes Dynamic Timeslot Reduction (DTR) where the MS resumes normal operation only and immediately upon receiving an EGPRS RLC/MAC block for data transfer which no longer includes the DTR command.

The publication NOKIA CORPORATION ET AL: "Dynamic Timeslot Reduction", 3GPP DRAFT; GP-090266, 3RD GENERATION PARTNERSHIP PROJECT (3GPP), MOBILE COMPETENCE CENTRE; 650, ROUTE DES LUCIOLES ; F-06921 SOPHIA-ANTIPOLIS CEDEX; FRANCE, val. TSG GERAN, no. Malta; 20090216, 12 February 2009 (2009-02-12), XP050414554, [retrieved on 2009-02-12] describes Dynamic Timeslot Reduction (DTR) where the MS resumes normal operation upon the reception of an RLC/MAC header including BSN higher than the BSN of the last RLC block which triggered the mobile station to switch to the reduced timeslot configuration.

The publication NOKIA CORPORATION ET AL: "Dynamic Timeslot Reduction", 3GPP DRAFT; GP-100349, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX; FRANCE, val. TSG GERAN, no. Berlin; 20100301, 25 February 2010 (201 0-02-25), XP050416687, [retrieved on 201 0-02-25] describes Dynamic Timeslot Reduction (DTR) where the MS leaves the DTR mode when a new RLC data block is received. Furthermore, when a message assigning a new TBF or reconfigures an ongoing TBF, the MS exits the DTR mode.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.

Fig. 1 is an illustration of timeslot reduction where an MS observes that timeslots are not being used for data transfer and autonomously reduces a number of monitored timeslots;

Fig. 2 is an example message flow illustrating timeslot monitoring resumption where the network assigns BSNs incrementally on carrier C1 and then carrier C2;

Fig. 3 is an example message flow illustrating timeslot monitoring resumption where the network assigns BSNs to timeslots in increasing timeslot order;

Fig. 4 is an illustration of an example block transmission including four bursts;

Fig. 5 is an illustration showing full monitoring of all available bursts of allocated timeslots within a particular block;

Fig. 6 is an illustration showing partial monitoring of the available bursts of one or more allocated timeslot within a particular block;

Fig. 7 is a diagram of a wireless communications system including an MS operable for some of the various embodiments of the disclosure;

Fig. 8 is a block diagram of an MS operable for some of the various embodiments of the disclosure;

Fig. 9 is a diagram of a software environment that may be implemented on an MS operable for some of the various embodiments of the disclosure; and

Fig. 10 is an illustrative general purpose computer system suitable for some of the various embodiments of the disclosure.

### DETAILED DESCRIPTION

The present disclosure relates generally to data transmission protocols in mobile communication systems and, more specifically, to a system and method for the resumption of timeslot monitoring in, for example, dual carrier downlink communication systems.

One implementation includes a method for a mobile station to communicate with a wireless communications network. The method includes monitoring a first subset of timeslots of a set of timeslots designated for communication and determining, from at least data associated with the first subset of timeslots, that timeslots not within the first subset of timeslots had communications directed to the mobile station associated therewith and were not monitored by the mobile station. The method also includes monitoring a second subset of timeslots of the set of timeslots after said determining.

Another implementation includes method for a mobile station to communicate with a wireless communications network. The method includes monitoring a subset of the available bursts for at least one timeslots allocated to the mobile station and, after receiving only a subset of available bursts, attempting to determine an encoded temporary flow identity (TFI). The method also includes, upon determining a TFI that identifies a temporary block flow (TBF) between the mobile station and the network, monitoring all timeslots allocated to the mobile station.

The various aspects of the disclosure are now described with reference to the annexed drawings, wherein like numerals refer to like or corresponding elements throughout. It should be understood, however, that the drawings and detailed description relating thereto are not intended to limit the claimed subject matter to the particular form disclosed. Rather, the intention is to cover all modifications, equivalents, and alternatives falling within the scope of the claimed subject matter.

As used herein, the terms "component," "system," and the like are intended to refer to a computer-related entity, either hardware, a combination of hardware and software, software, or software in execution. For example, a component may be, but is not limited to being, a process running on a processor, a processor, an object, an executable, a thread of execution, a program, and/or a computer. By way of illustration, both an application running on a computer and the computer can be a component. One or more components may reside within a process and/or thread of execution and a component may be localized on one computer and/or distributed between two or more computers.

The word "exemplary" is used herein to mean serving as an example, instance, or illustration. Any aspect or design described herein as "exemplary" is not necessarily to be construed as preferred or advantageous over other aspects or designs.

Furthermore, the disclosed subject matter may be implemented as a system, method, apparatus, or article of manufacture using standard programming and/or engineering techniques to produce software, firmware, hardware, or any combination thereof to control a computer or processor based device to implement aspects detailed herein. The term "article of manufacture" (or alternatively, "computer program product") as used herein is intended to encompass a computer program accessible from any computer-readable device, channel, or media. For example, computer readable media can include but are not limited to magnetic storage devices (for example, hard disk, floppy disk, magnetic strips, and the like), optical disks (for example, compact disk (CD), digital versatile disk (DVD), and the like), smart cards, and flash memory devices (for example, card, stick, and the like). Additionally, it should be appreciated that a carrier wave can be employed to carry computer-readable electronic data such as those used in transmitting and receiving electronic mail or in accessing a network such as the Internet or a local area network (LAN). Of course, those skilled in the art will recognize many modifications may be made to this configuration without departing from the scope of the claimed subject matter.

An MS may be assigned multiple timeslots for uplink or downlink communications. In existing networks, the MS monitors all allocated timeslots to detect transmissions from the network. However, in the case that either the network or the MS has no data to send on one or more timeslots, and particularly when neither the network nor the MS has data to send on one or more timeslots, this monitoring activity results in significant wasted power in the MS. To minimize power consumption, the MS may be configured to cease monitoring particular timeslot resources. In existing network implementations, however, if an MS were to unilaterally cease monitoring particular timeslots, there is no mechanism for the MS to detect that the network has resumed data transmission or transmission of assigned USFs on the timeslot resources that are not being monitored by the MS.

In some cases, a network may be configured to explicitly instruct the MS to either cease or resume listening to particular timeslot resources. Such an implementation, however, requires additional signaling, such as a new MS capability indicator (that the MS supports the feature) and additional signaling to indicate when timeslot reduction should be applied. Furthermore, the network entity responsible for controlling the MS timeslot monitoring (for example, the packet control unit (PCU) or some other part of a base station subsystem) is unaware of higher layer protocols, or applications, and their traffic patterns. As a result, it may be difficult for timeslot reduction to be carried out effectively (e.g., as soon as traffic ceases, and avoiding cases where traffic is likely to resume very shortly). Also, if the MS's timeslot reduction is under network control or implemented with network awareness, USFs will only be sent on downlink timeslots that the network knows the MS to be monitoring. If the network is not aware of the reduction in monitoring, the network may be sending USFs on a timeslot that the MS is not monitoring.

In contrast, the present system provides a mechanism to trigger an MS to resume monitoring of one or more timeslots within the assignment (for example, to resume monitoring on all assigned timeslots). The triggering mechanism operates even when the network does not control when and how an MS's timeslot reduction occurs. For example, the present system allows an MS with a downlink dual carrier assignment to automatically reduced the number of timeslots that are monitored and, when the network begins to use non-monitored timeslots to transmit data, resume monitoring of additional ones of the allocated timeslots.

In the present system, an MS is configured to monitor only a subset of the allocated timeslots, and to determine, based on what is received on the monitored timeslots, that data or control messages addressed to the MS are being (or have been) sent on one or more of the unmonitored timeslots. In response to this determination, the MS is configured to increase the number of allocated timeslots that are being monitored. As such, the MS can autonomously reduce timeslot monitoring without informing the network, and can then resume timeslot monitoring with minimal delay.

Although in implementing the present system some data blocks may be missed, the power saving benefits of monitoring only a reduced set of timeslots offset the additional over-head of resulting data re-transmissions. To reduce the risk of missed data blocks, however, an MS of the present system may be configured to monitor one or two bursts of each block that could be addressed to the MS. Using those bursts, the MS can estimate or determine whether the blocks are addressed to the MS and can then monitor the full set of bursts/timeslots in subsequent block periods.

In the present system, where the MS may implement timeslot reduction autonomously (i.e., where the network is unaware that the MS has implemented reduced timeslot monitoring), the network may send USFs to allocate uplink blocks on timeslots the MS is not monitoring. As such, the present system provides a trigger mechanism causing the MS to resume monitoring additional blocks (preferably, those on which a USF could be received). Generally, in an autonomous approach, the MS should ensure the MS can receive control messages; if Extended Dynamic Allocation (EDA) is used, there is a specific subset of assigned timeslots upon which the control messages may be sent.

In the present system, if an MS observes that on the second carrier of a downlink dual carrier assignment, the monitored timeslots have not been used for a period of time, the MS may be configured to apply automatic timeslot reduction for the unused timeslots (or, if all timeslots on the second carrier have been unused, stop monitoring the second carrier entirely). The timeslot reduction may be implemented by the MS without any explicit permission from or notification to the network. In some cases, the network sends downlink control blocks only in the lowest timeslot, in which case the MS may continue to monitor the lowest timeslot on the second carrier, but discontinue monitoring the other allocated timeslots on the second carrier.

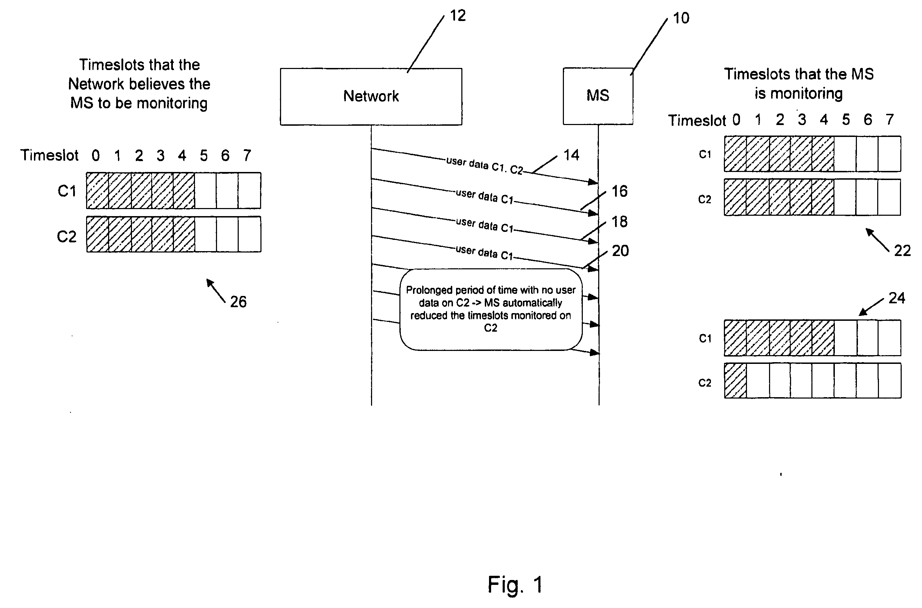

Fig. 1 is an illustration of timeslot reduction where an MS observes that timeslots are not being used for data transfer and autonomously reduces a number of monitored timeslots. Referring to Fig. 1, network 12 communicates with MS 10 using two carriers, C1 and C2. Initially, network 12 allocates MS 10 timeslots 0-4 on carrier C1 and timeslots 0-4 on carrier C2 (see table 26 on Fig. 1). At all times, network 12 believes that MS 10 is monitoring all allocated timeslots. Upon initiating communication with MS 10, MS 10 monitors all assigned timeslots (see the hashed timeslots shown in table 22 on Fig. 1).

In Fig. 1, network 12 initiates a series of data transmissions to MS 10. In the first transmission, transmission 14, network 12 transmits data to MS 10 using both carriers C1 and C2. However, for the next three transmissions 16, 18, and 20, network 12 only uses carrier C1 to transmit data to MS 10. After a pre-determined number of sequential transmissions from network 12 that do not use carrier C2, MS 10 is configured to stop monitoring one or more timeslots on carrier C2. In the example shown in Fig. 1, after receiving transmission 20, MS 10 switches to only monitor timeslot 0 on carrier C2, leaving timeslots 1-4 on carrier C2 unmonitored (see element 24).

Upon reducing the number of monitored timeslots on carrier C2, however, MS 10 acts autonomously and does not inform network 12 of the timeslot reduction. Accordingly, at any time, network 12 may resume transmissions to MS 10 on one or more of the unmonitored timeslots on carrier C2 without the knowledge that the MS is no longer monitoring those timeslots.

In order to detect a transmission from network 12 on one or more of the unmonitored timeslots on carrier C2, MS 10 is configured to observe the order of the block sequence numbers (BSNs) on the first and remaining fully monitored carrier (e.g., carrier C1), or on the monitored timeslots (e.g., timeslots 0-4 on carrier C1 and timeslot 0 on carrier C2). MS 10 then uses the BSNs to determine whether the network has allocated blocks on the second carrier.

Because the BSN order from one radio block period to the next should only increase by a value of one, if the BSN order jumps by more than one, MS 10 can determine that network 12 allocated block or blocks on timeslots that were not monitored. In other words, because the network is required to transmit blocks (that have not been previously transmitted) in increasing BSN order from one radio block period to the next; if the highest block received in 1 block period is N, and the lowest in the next block period is N+2 (or some other value greater than N+1), this indicates that the missing block was likely transmitted on a non-monitored timeslot. In particular, if the MS decoded without error all blocks received on the monitored timeslots (whether or not they were addressed to the MS), then the MS can be sure that blocks addressed to the MS were sent on un-monitored timeslots. In some cases, the MS may be even detect this situation within a single block period based on detected blocks received in a single block period. For example, if blocks 22, 24, 26, and 28 are received on the monitored timeslots, then blocks 22, 25 and 27 were transmitted on unmonitored blocks.

Even if the MS is unable to decode all received blocks error-free, the MS may be able to determine that unmonitored timeslots were used by the network if all of the missing blocks could not have been (or were very unlikely to have been) sent on the timeslots where errors were detected (e.g., the MS is unable to decode 2 timeslots, but the BSN jumps by 3 from one radio block period to the next, and the network has been observed to be sending only one radio link control (RLC) data block per radio block). It should be noted that in some cases these errors would have to be in decoding the header of the block which contains the BSN, and which is relatively robustly coded.

Based on the sequence of blocks received on the first and remaining carrier, the MS can know that the unmonitored timeslots on the second carrier are again in use and can begin fully monitoring all the assigned timeslots of the second carrier, for example, in the next radio block period.

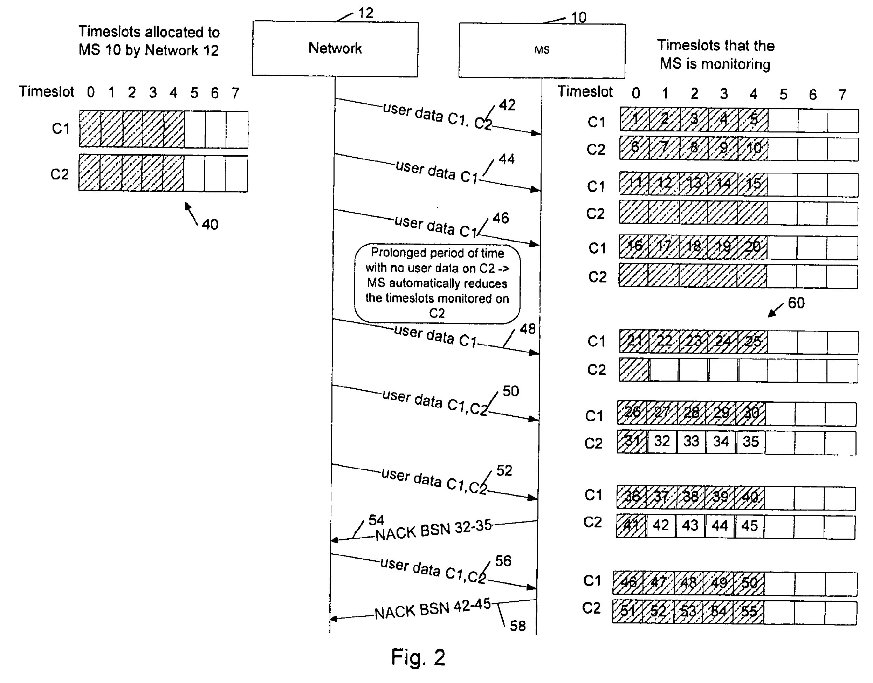

Fig. 2 is an example message flow illustrating timeslot monitoring resumption where the network assigns BSNs incrementally on carrier C1 and then carrier C2. Referring to Fig. 2, at a first time, network 12 allocates MS 10 timeslots 0-4 on carrier C1 and timeslots 0-4 on carrier C2 (see the hashed timeslots of table 40 on Fig. 2). At that time, MS 10 is monitoring all allocated timeslots. In Fig. 2, for each transmission (e.g., transmissions 42, 44, 46, etc.), a table or chart illustrating the timeslots being monitored by the MS (i.e., the hashed timeslots) at the time of receipt of transmission is shown to the right of the transmission. Within the illustration of timeslots being monitored by the MS, the numbers in each block represent the BSN.

Network 12 initiates a series of data transmissions to MS 10. In the first transmission 42, network 12 transmits data to MS 10 using both carriers C1 and C2. The transmission on carrier C1 uses timeslots 0-4 with BSNs of 1, 2, 3, 4, and 5. The transmission on C2 uses timeslots 0-4 with BSNs of 6, 7, 8, 9 and 10 (the BSNs are shown inside the respective timeslot boxes on Fig. 2).

In the next two transmissions 44 and 46, however, network 12 only uses carrier C1 to transmit data to MS 10. After a pre-determined number of sequential transmissions from network 12 that do not use carrier C2, MS 10 is configured to stop monitoring one or more timeslots on carrier C2. Accordingly, after receiving transmission 46, MS 10 stops monitoring timeslots 1-4 on carrier C2. Accordingly, for transmission 48, MS 10 is only monitoring timeslot 0 on carrier C2 (see timeslot map 60).

In transmission 50, however, network 12 begins using all available timeslots on both carrier C1 and carrier C2 for the transmission of data to MS 10. In transmission 50, timeslots 0-4 in carrier C1 carry data blocks having BSNs of 26-30, respectively and the timeslots 0-4 in carrier C2 carry data blocks having BSNs 31-35, respectively. At this time, however, because MS 10 is no longer monitoring timeslots 1-4 on carrier C2, MS 10 fails to receive the blocks that have BSNs 32-35.

In the next transmission 52, MS 10 expects the BSN of the first received block to be 32 (one more than the largest BSN received by MS 10 in the prior transmission 50). However, as shown in Fig. 2, the first received block in transmission 52 has a BSN of 36. Because 36 is greater than one plus the highest BSN received by MS 10 in the prior transmission 50 (i.e., 31), MS 10 knows that one or more blocks were transmitted using the timeslots that MS 10 was not monitoring. In fact, MS 10 can determine that it failed to receive the blocks having MSNs of 32, 33, 34, and 35. Accordingly, MS 10 transmits a negative acknowledgement (NACK) message for the missing BSNs (32, 33, 34, and 35) to network 12 in step 54. The NACK message causes network 12 to re-transmit those blocks to MS 10. In some cases, however, if the MS is not configured in a mode wherein acknowledgement (ACK)/NACK information is pre-emptively transmitted, such as in an event-based fast ACK/NACK reporting (FANR) mode, the network may query the MS to confirm that particular blocks have been successfully received by the MS. For the next transmission, MS 10 also begins monitoring all allocated timeslots.

When the MS indicates to the network that the MS did not receive the missing blocks (which were not received because the MS was not monitoring the timeslots on which they were transmitted), the MS may indicate that the reason the MS did not receive the blocks was due to the reduced monitoring that was in effect. In response to the indication, the network may adapt its link adaptation algorithm accordingly because the network knows the blocks were not missed due to radio channel conditions (e.g. by not using a more robust encoding, as might be applied if blocks were assumed to be missed due to channel conditions).

At the time of the next transmission 56, MS 10 is monitoring all allocated timeslots and so receives all data transmitted on both carrier C1 and carrier C2 by network 12. However, because the first BSN of transmission 56 is 46, MS 10 knows that it also failed to receive blocks having BSNs of 42, 43, 44, and 45 from the prior transmission 54. Accordingly, in step 58 MS 10 transmits a NACK message for the missing BSNs (42, 43, 44, and 45) to network 12 in step 58.

In this example, if instead the MS had been monitoring a higher-numbered timeslot on carrier 2 (e.g. timeslot number 4) at step 50, then the MS can determine that, having received BSNs 26-31 inclusive and BSN 35, blocks addressed to the MS were transmitted on unmonitored timeslots (because the network should have transmitted blocks 32-34 inclusive before, or during the same radio block period as, the block period in which BSN 35 was transmitted) even before receiving any blocks at step 52.

In some network implementations, the network allocates blocks to timeslots in increasing order (e.g., blocks are assigned to timeslots 0 on all available carriers before any blocks are assigned to timeslot 1) with the BSNs being allocated in the same manner. Even in that implementation, the present system provides a mechanism for an MS to detect when the network begins again to allocate blocks to the second carrier on timeslots that were previously unmonitored by the MS.

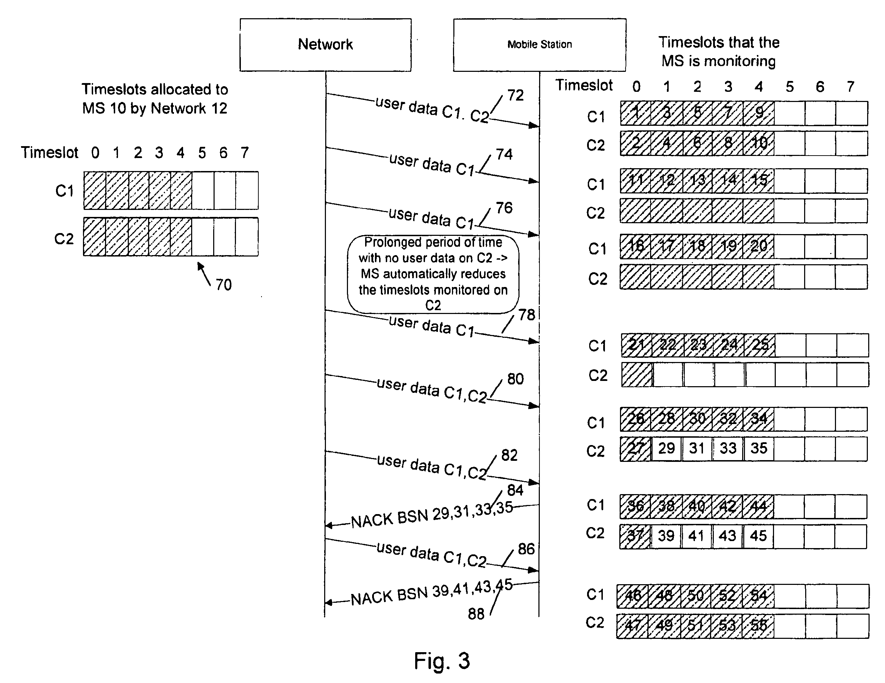

For example, Fig. 3 is an example message flow illustrating timeslot monitoring resumption where the network assigns BSNs to timeslots in increasing timeslot order. In Fig. 3, for each transmission (e.g., transmissions 72, 74, 76, etc.), a table illustrating the timeslots being monitored by the MS (i.e., the hashed timeslots) at the time of receipt of transmission is shown to the right of the transmission. Within the illustration of timeslots being monitored by the MS, the numbers in each block represent the BSN.

Referring to Fig. 3, at a first time, network 12 allocates MS 10 timeslots 0-4 on carrier C1 and timeslots 0-4 on carrier C2 (see the hashed timeslots of table 70 on Fig. 3). At that time, MS 10 is monitoring all allocated timeslots.

Network 12 initiates a series of data transmissions to MS 10. In the first transmission 72, network 12 transmits data to MS 10 using both carriers C1 and C2. The transmission on carrier C1 uses timeslots 0-4 with BSNs of 1, 3, 5, 7, and 9. The transmission on carrier C2 uses timeslots 0-4 with BSNs of 2, 4, 6, 8 and 10.

In the next two transmissions 74, and 76, however, network 12 only uses carrier C1 to transmit data to MS 10. After a pre-determined number of sequential transmissions from network 12 that do not use carrier C2, MS 10 is configured to stop monitoring one or more timeslots on carrier C2. Accordingly, after receiving transmission 76, MS 10 stops monitoring timeslots 1-4 on carrier C2. Accordingly, for transmission 78, MS 10 is only monitoring timeslot 0 on carrier C2.

In transmission 80, however, network 12 begins using all allocated timeslots on both carrier C1 and carrier C2 for the transmission of data to MS 10. In transmission 80, timeslots 0-4 in carrier C1 carry data blocks having BSNs of 26, 28, 30, 32, and 34, respectively and timeslots 0-4 in carrier C2 carry data blocks having BSNs 27, 29, 31, 33, and 35, respectively. At this time, however, because MS 10 is no longer monitoring timeslots 1-4 on carrier C2, MS 10 fails to receive the blocks that have BSNs 29, 31, 33 and 35.

In the next transmission 82, MS 10 fails to receive the missing BSNs 29, 31, 33 and 35. In fact, the first BSN received is 36, which is more than one greater than the highest received BSN in the previous radio block period (i.e., 27). Accordingly, MS 10 that one or more blocks were transmitted using timeslots that MS 10 was not monitoring. MS 10 can further determine that it failed to receive the blocks having MSNs of 29, 31, 33 and 35. Accordingly, MS 10 transmits a negative acknowledgement (NACK) message for the missing BSNs (29, 31, 33 and 35) to network 12 in step 84. The NACK message causes network 12 to re-transmit those blocks to MS 10. At this time, MS 10 also begins monitoring all allocated timeslots.

At the time of the next transmission 86, MS 10 is monitoring all allocated timeslots and so receives all data transmitted on both carrier C1 and carrier C2. However, MS 10 fails to receive blocks having BSNs 39, 41, 45, and 45 that were missing from transmission 82. Accordingly, in step 88, MS 10 transmits a NACK message for the missing BSNs (39, 41, 45, and 45) to network 12 in step 54.

The MS may observe in radio block periods that the network uses a block to carrier/timeslot mapping as shown either in Fig. 2 or Fig. 3. If the MS has previously observed block ordering of the type shown in Fig. 3 (i.e. whereby lower-numbered blocks are transmitted on lower numbered timeslots, independently of the carrier) the MS may determine sooner that blocks have been missed because of the MS's reduced monitoring e.g. in Fig. 3, at transmission 80, having observed that block 30 (and not block 29) was transmitted in timeslot 2 on carrier 1 and knowing the transmission order policy used by the network, the MS may determine that block 29 was transmitted on carrier 2 in timeslot 1. Accordingly, whether the network uses the transmission policy as shown in Fig. 2 or uses the policy in Fig. 3, the MS may determine at the end of the first block period in which transmissions were missed due to reduced monitoring that this was the case. However, the optimum set of timeslots to monitor in each case may be different, and the MS may take into account previously observed transmissions by the network to determine which policy is in use, and, hence, which timeslots to monitor when monitoring only a subset of the assigned timeslots.

Note that the examples shown in Fig. 2 and Fig. 3 assume that only one radio link control (RLC) data block (with one sequence number) is sent per radio block; however, the present system may also be used when more than one RLC data block is sent per radio block.

The MS may be configured to suspend monitoring on the second carrier entirely, for example, to allow the MS to fully power down the receiver components responsible for monitoring the second carrier to further save battery resources. Alternatively, this could allow the MS to tune the second carrier to an alternate frequency to perform measurements or background scanning tasks, for example.

When the MS reduces monitoring of timeslots on the second carrier of a dual carrier assignment, the reduction may be made autonomously by the MS. As a result, the MS has flexibility regarding when and to what extent to implement timeslot reduction.

In some cases, this autonomous reduction and resumption of full timeslot monitoring incurs lost blocks that need to be retransmitted if the MS is operating in acknowledged mode. In acknowledged mode, the MS may decide autonomously based on various criteria when and by how much to reduce timeslot monitoring. Criteria that may be taken into account include: battery level, power supply (whether the device has a power supply connected), latency sensitivity of the application being used, characteristics of data being transferred (e.g. file size etc.), or previous observations of network assignment/allocation behavior, for example.

In the case that battery level is a factor in the timeslot monitoring reduction determination, if battery level is low, the MS may reduce timeslot monitoring significantly and sooner that the MS would otherwise do so. If a power supply is connected to the MS, the MS may be configured to refrain from reduced monitoring, or apply any reduction conservatively (e.g. only after extended periods of a lack of data transfer on some timeslots). In the case of latency sensitivity, the MS may take a conservative approach to timeslot reduction for latency sensitive applications because loss of data (even though the data may be retransmitted later) could affect application performance. Regarding characteristics of data transfer, for large file downloads, if some assigned resources are not being used, the timeslot use may be unchanged for some time, so more aggressive timeslot reduction may be applied to the timeslots not being used. For the case of previous observations, if networks are observed to over-assign resources (which are subsequently not used), the MS may be configured to implement timeslot reduction based on these observed patterns, particularly with respect to the transmission of control information on otherwise-unused timeslots.

An alternative approach to autonomous timeslot reduction for the MS may be to reduce the indicated capabilities of the MS, however this requires additional signaling, and may be less flexible and may incur delay while the new indicated capabilities are processed and taken into account by the network.

For a particular TBF established between an MS and a network, the TBF may be identified by a temporary flow identity (TFI). The TFI is provided in a header of a data block and is, generally, robustly encoded. As a result, by monitoring only one or two of the four bursts of a particular block, it may be possible to successfully estimate or decode the TFI. Accordingly, after implementing timeslot monitoring reduction, an MS may be configured to inspect a subset of available bursts for a particular block. If the MS detects a TFI relating to a TBF between the MS and the network (that is, a TBF assigned to the MS) or determines with a probability greater than a predetermined threshold that the TFI is related to such a TBF, the MS may resume monitoring on one or more previously unmonitored timeslots.

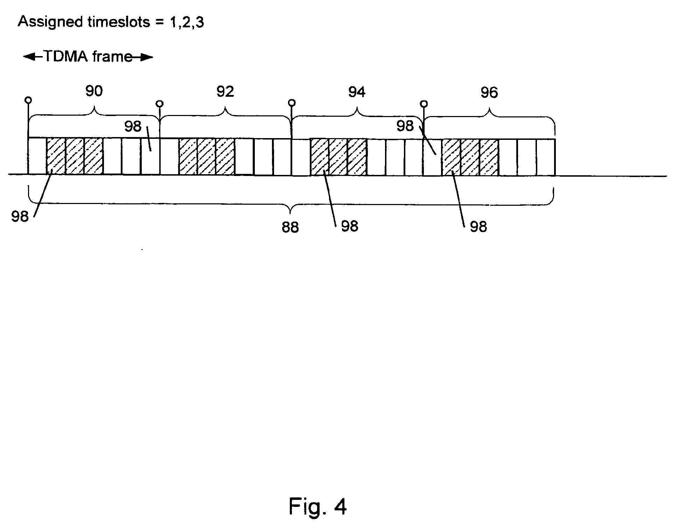

Fig. 4 is an illustration of an example block transmission including four bursts. Burst 90, 92, 94 and 96 are each transmitted within one block 88. Each burst includes several timeslots 98, of which the MS has been assigned timeslots 1, 2, and 3 (see the hashed timeslots) and not timeslots 0, 4, 5, and 6. A header portion is encoded across the four bursts of each timeslot. Generally, to determine the TFI for a particular timeslot, each burst of the timeslot is retrieved and the TFI is calculated using the data included in each of the four bursts. However, because the TFI is robustly encoded, it may be possible to receive only a subset of the four available bursts for a timeslot and still decode the TFI, or make a reasonable estimate of the TFI value.

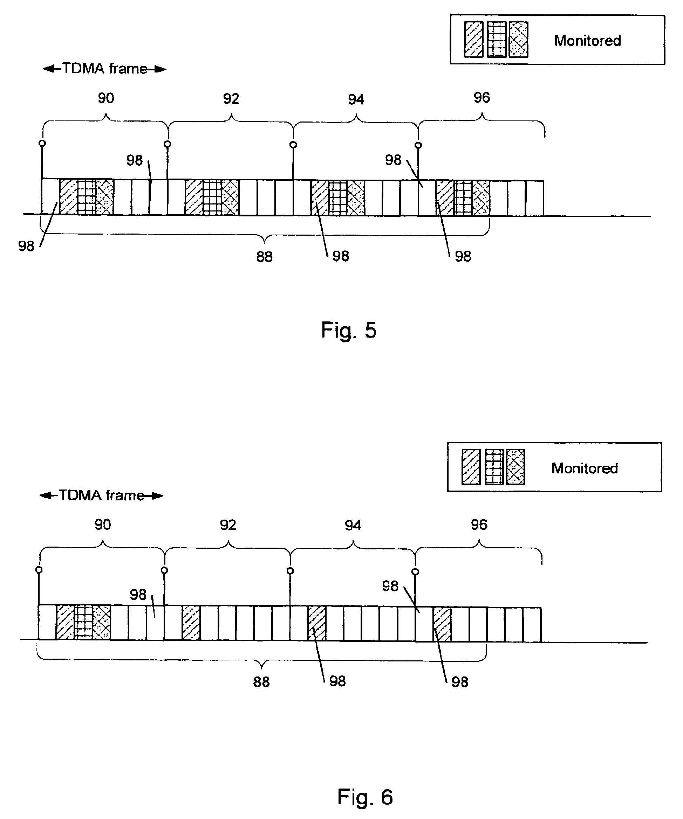

For example, Fig. 5 is an illustration showing full monitoring of all available bursts of allocated timeslots within a particular block. As shown in Fig. 5, the MS is configured to monitor all four bursts for each of the allocated timeslots. In this monitoring scheme, however, the MS may consume significant battery power as it must receive and process each of the four received bursts for each allocated timeslot.

In the present system, the MS may be configured to monitor only a subset of the available bursts for one or more of the timeslots allocated to the MS. After receiving only a subset of the available bursts, the MS attempts to determine the encoded TFI from the available data. If the TFI is successfully decoded, and the TFI identifies a TBF between the MS and network, the MS may resume full monitoring of all allocated timeslots, for example. Similarly, even if the TFI is only partially decoded, but appears to be related to a TBF between the MS and network, the MS may resume full monitoring of all allocated timeslots. Alternatively, when the TFI is not fully decoded, depending upon how a degree of similarity between the partially decoded TFI and the MS's TFIs, the MS may begin monitoring additional bursts on only one or more of the allocated timeslots.

Fig. 6 is an illustration showing partial monitoring of the available bursts of one or more allocated timeslot within a particular block. In Fig. 6, for the first allocated timeslot (timeslot 1), the MS monitors all available bursts of that timeslot. However, for the remaining allocated timeslots (timeslots 2 and 3), the MS only monitors the first burst of each of those timeslots. Accordingly, the MS consumes less power by monitoring fewer bursts. Based upon the likely or estimated contents of the monitored subset of available bursts, it may be feasible to determine that the block is addressed to the MS and that the MS should therefore increase the set of timeslots being monitored.

Depending on the implementation of the device (for example the time required to schedule burst decoding), the increased monitoring of timeslots may occur at a future block period, or within the same block period (in which case it may be possible to avoid missing any blocks addressed to the MS). For example, if burst reception and decoding can be scheduled within 2 TDMA frames, then at least the fourth burst of a block (see, for example Fig. 6) could be received and decoded based on the decoding of the first burst. Even if it is not possible as a result to decode the complete block based on only two bursts, this information may be stored to improve decoding of a retransmission of that burst.

In addition to the BSN detection scheme illustrated in Figs. 2 and 3 and the burst subset monitoring described above, additional factors may be used by an MS to determine whether the MS should resume monitoring one or more assigned timeslots. For example, receipt of a resource (re-)assignment message, initiation of an uplink or downlink transmission that is not already ongoing, or channel quality deterioration such that it cannot be reliably determined whether missing blocks are due to the use of unmonitored timeslots or errors in decoding may be all be factors causing the MS to resume monitoring previously unmonitored allocated timeslots.

In the case that the MS has reduced the timeslot monitoring such that the MS no longer monitors all timeslots on which an assigned USF is received (e.g. because the MS has no uplink data to transmit or in general has no use for an uplink allocation) the MS may increase monitoring based on the determination that uplink data is to be sent (e.g. because data has been received from higher layers), preferably to monitor all timeslots on which the MS may receive an assigned USF, in order to minimize the delay in being able to transmit the uplink data.

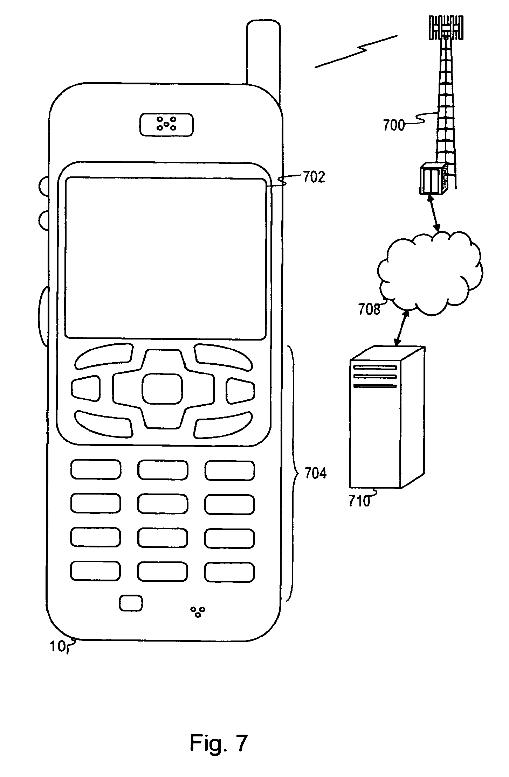

Fig. 7 illustrates a wireless communications system including an embodiment of an MS 10. MS 10 is operable for implementing aspects of the disclosure, but the disclosure should not be limited to these implementations. Though illustrated as a mobile phone, the MS 10 may take various forms including a wireless handset, a pager, a personal digital assistant (PDA), a portable computer, a tablet computer, a laptop computer. Many suitable devices combine some or all of these functions. In some embodiments of the disclosure, the MS 10 is not a general purpose computing device like a portable, laptop or tablet computer, but rather is a special-purpose communications device such as a mobile phone, a wireless handset, a pager, a PDA, or a telecommunications device installed in a vehicle. The MS 10 may also be a device, include a device, or be included in a device that has similar capabilities but that is not transportable, such as a desktop computer, a set-top box, or a network node. The MS 10 may support specialized activities such as gaming, inventory control, job control, and/or task management functions, and so on.

The MS 10 includes a display 702. The MS 10 also includes a touch-sensitive surface, a keyboard or other input keys generally referred as 704 for input by a user. The keyboard may be a full or reduced alphanumeric keyboard such as QWERTY, Dvorak, AZERTY, and sequential types, or a traditional numeric keypad with alphabet letters associated with a telephone keypad. The input keys may include a trackwheel, an exit or escape key, a trackball, and other navigational or functional keys, which may be inwardly depressed to provide further input function. The MS 10 may present options for the user to select, controls for the user to actuate, and/or cursors or other indicators for the user to direct.

The MS 10 may further accept data entry from the user, including numbers to dial or various parameter values for configuring the operation of the MS 10. The MS 10 may further execute one or more software or firmware applications in response to user commands. These applications may configure the MS 10 to perform various customized functions in response to user interaction. Additionally, the MS 10 may be programmed and/or configured over-the-air, for example from a wireless base station, a wireless access point, or a peer MS 10.

Among the various applications executable by the MS 10 are a web browser, which enables the display 702 to show a web page. The web page may be obtained via wireless communications with a wireless network access node, a cell tower, a peer MS 10, or any other wireless communication network or system 700. The network 700 is coupled to a wired network 708, such as the Internet. Via the wireless link and the wired network, the MS 10 has access to information on various servers, such as a server 710. The server 710 may provide content that may be shown on the display 702. Alternately, the MS 10 may access the network 700 through a peer MS 10 acting as an intermediary, in a relay type or hop type of connection.

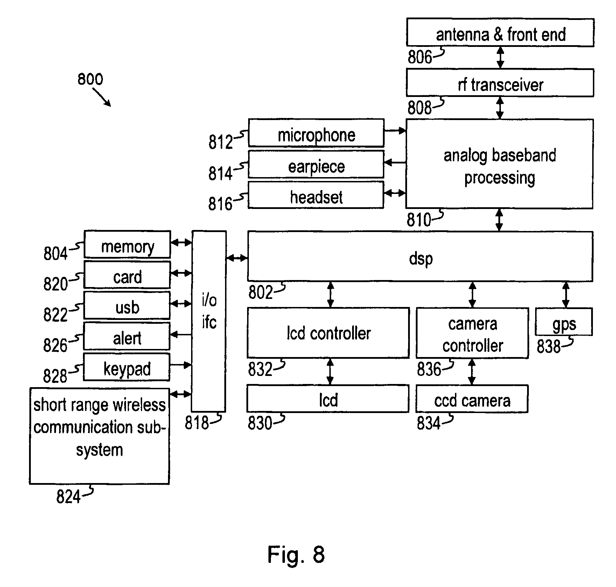

Fig. 8 shows a block diagram of the MS 10. While a variety of known components of MSs 10 are depicted, in an embodiment a subset of the listed components and/or additional components not listed may be included in the MS 10. The MS 10 includes a digital signal processor (DSP) 802 and a memory 804. As shown, the MS 10 may further include an antenna and front end unit 806, a radio frequency (RF) transceiver 808, an analog baseband processing unit 810, a microphone 812, an earpiece speaker 814, a headset port 816, an input/output interface 818, a removable memory card 820, a universal serial bus (USB) port 822, a short range wireless communication sub-system 824, an alert 826, a keypad 828, a liquid crystal display (LCD), which may include a touch sensitive surface 830, an LCD controller 832, a charge-coupled device (CCD) camera 834, a camera controller 836, and a global positioning system (GPS) sensor 838. In an embodiment, the MS 10 may include another kind of display that does not provide a touch sensitive screen. In an embodiment, the DSP 802 may communicate directly with the memory 804 without passing through the input/output interface 818.

The DSP 802 or some other form of controller or central processing unit operates to control the various components of the MS 10 in accordance with embedded software or firmware stored in memory 804 or stored in memory contained within the DSP 802 itself. In addition to the embedded software or firmware, the DSP 802 may execute other applications stored in the memory 804 or made available via information carrier media such as portable data storage media like the removable memory card 820 or via wired or wireless network communications. The application software may comprise a compiled set of machine-readable instructions that configure the DSP 802 to provide the desired functionality, or the application software may be high-level software instructions to be processed by an interpreter or compiler to indirectly configure the DSP 802.

The antenna and front end unit 806 may be provided to convert between wireless signals and electrical signals, enabling the MS 10 to send and receive information from a cellular network or some other available wireless communications network or from a peer MS 10. In an embodiment, the antenna and front end unit 806 may include multiple antennas to support beam forming and/or multiple input multiple output (MIMO) operations. As is known to those skilled in the art, MIMO operations may provide spatial diversity which can be used to overcome difficult channel conditions and/or increase channel throughput. The antenna and front end unit 806 may include antenna tuning and/or impedance matching components, RF power amplifiers, and/or low noise amplifiers.

The RF transceiver 808 provides frequency shifting, converting received RF signals to baseband and converting baseband transmit signals to RF. In some descriptions a radio transceiver or RF transceiver may be understood to include other signal processing functionality such as modulation/demodulation, coding/decoding, interleaving/deinterleaving, spreading/despreading, inverse fast Fourier transforming (IFFT)/fast Fourier transforming (FFT), cyclic prefix appending/removal, and other signal processing functions. For the purposes of clarity, the description here separates the description of this signal processing from the RF and/or radio stage and conceptually allocates that signal processing to the analog baseband processing unit 810 and/or the DSP 802 or other central processing unit. In some embodiments, the RF Transceiver 808, portions of the Antenna and Front End 806, and the analog base band processing unit 810 may be combined in one or more processing units and/or application specific integrated circuits (ASICs).

The analog base band processing unit 810 may provide various analog processing of inputs and outputs, for example analog processing of inputs from the microphone 812 and the headset 816 and outputs to the earpiece 814 and the headset 816. To that end, the analog base band processing unit 810 may have ports for connecting to the built-in microphone 812 and the earpiece speaker 814 that enable the MS 10 to be used as a cell phone. The analog base band processing unit 810 may further include a port for connecting to a headset or other hands-free microphone and speaker configuration. The analog base band processing unit 810 may provide digital-to-analog conversion in one signal direction and analog-to-digital conversion in the opposing signal direction. In some embodiments, at least some of the functionality of the analog base band processing unit 810 may be provided by digital processing components, for example by the DSP 802 or by other central processing units.

The DSP 802 may perform modulation/demodulation, coding/decoding, interleaving/deinterleaving, spreading/despreading, inverse fast Fourier transforming (IFFT)/fast Fourier transforming (FFT), cyclic prefix appending/removal, and other signal processing functions associated with wireless communications. In an embodiment, for example in a code division multiple access (CDMA) technology application, for a transmitter function the DSP 802 may perform modulation, coding, interleaving, and spreading, and for a receiver function the DSP 802 may perform despreading, deinterleaving, decoding, and demodulation. In another embodiment, for example in an orthogonal frequency division multiplex access (OFDMA) technology application, for the transmitter function the DSP 802 may perform modulation, coding, interleaving, inverse fast Fourier transforming, and cyclic prefix appending, and for a receiver function the DSP 802 may perform cyclic prefix removal, fast Fourier transforming, deinterleaving, decoding, and demodulation. In other wireless technology applications, yet other signal processing functions and combinations of signal processing functions may be performed by the DSP 802.

The DSP 802 may communicate with a wireless network via the analog baseband processing unit 810. In some embodiments, the communication may provide Internet connectivity, enabling a user to gain access to content on the Internet and to send and receive e-mail or text messages. The input/output interface 818 interconnects the DSP 802 and various memories and interfaces. The memory 804 and the removable memory card 820 may provide software and data to configure the operation of the DSP 802. Among the interfaces may be the USB interface 822 and the short range wireless communication sub-system 824. The USB interface 822 may be used to charge the MS 10 and may also enable the MS 10 to function as a peripheral device to exchange information with a personal computer or other computer system. The short range wireless communication subsystem 824 may include an infrared port, a Bluetooth interface, an IEEE 802.11 compliant wireless interface, or any other short range wireless communication subsystem, which may enable the MS 10 to communicate wirelessly with other nearby mobile devices and/or wireless base stations.

The input/output interface 818 may further connect the DSP 802 to the alert 826 that, when triggered, causes the MS 10 to provide a notice to the user, for example, by ringing, playing a melody, or vibrating. The alert 826 may serve as a mechanism for alerting the user to any of various events such as an incoming call, a new text message, and an appointment reminder by silently vibrating, or by playing a specific pre-assigned melody for a particular caller.

The keypad 828 couples to the DSP 802 via the interface 818 to provide one mechanism for the user to make selections, enter information, and otherwise provide input to the MS 10. The keyboard 828 may be a full or reduced alphanumeric keyboard such as QWERTY, Dvorak, AZERTY and sequential types, or a traditional numeric keypad with alphabet letters associated with a telephone keypad. The input keys may include a trackwheel, an exit or escape key, a trackball, and other navigational or functional keys, which may be inwardly depressed to provide further input function. Another input mechanism may be the LCD 830, which may include touch screen capability and also display text and/or graphics to the user. The LCD controller 832 couples the DSP 802 to the LCD 830.

The CCD camera 834, if equipped, enables the MS 10 to take digital pictures. The DSP 802 communicates with the CCD camera 834 via the camera controller 836. In another embodiment, a camera operating according to a technology other than Charge Coupled Device cameras may be employed. The GPS sensor 838 is coupled to the DSP 802 to decode global positioning system signals, thereby enabling the MS 10 to determine its position. Various other peripherals may also be included to provide additional functions, e.g., radio and television reception.

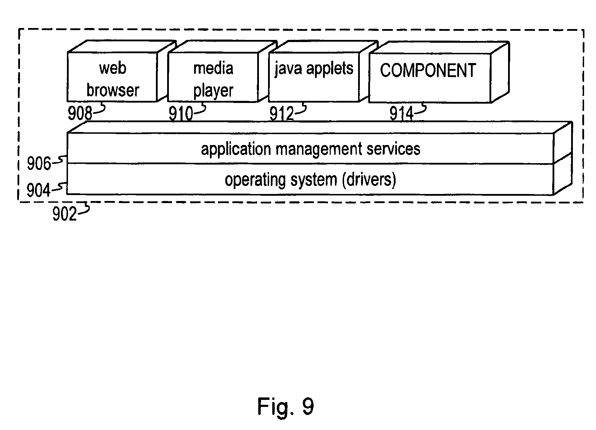

Fig. 9 illustrates a software environment 902 that may be implemented by the DSP 802. The DSP 802 executes operating system drivers 904 that provide a platform from which the rest of the software operates. The operating system drivers 904 provide drivers for the MS hardware with standardized interfaces that are accessible to application software. The operating system drivers 904 include application management services ("AMS") 906 that transfer control between applications running on the MS 10. Also shown in Fig. 9 are a web browser application 908, a media player application 910, and Java applets 912. The web browser application 908 configures the MS 10 to operate as a web browser, allowing a user to enter information into forms and select links to retrieve and view web pages. The media player application 910 configures the MS 10 to retrieve and play audio or audiovisual media. The Java applets 912 configure the MS 10 to provide games, utilities, and other functionality. A component 914 might provide functionality described herein.

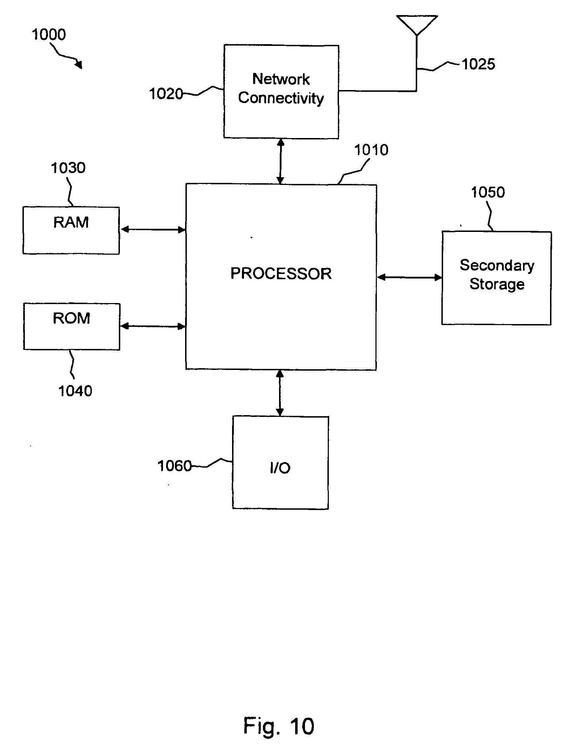

The MS 10, base station 120, and other components described above might include a processing component that is capable of executing instructions related to the actions described above. Fig. 10 illustrates an example of a system 1000 that includes a processing component 1010 suitable for implementing one or more embodiments disclosed herein. In addition to the processor 1010 (which may be referred to as a central processor unit (CPU or DSP), the system 1000 might include network connectivity devices 1020, random access memory (RAM) 1030, read only memory (ROM) 1040, secondary storage 1050, and input/output (I/O) devices 1060. In some cases, some of these components may not be present or may be combined in various combinations with one another or with other components not shown. These components might be located in a single physical entity or in more than one physical entity. Any actions described herein as being taken by the processor 1010 might be taken by the processor 1010 alone or by the processor 1010 in conjunction with one or more components shown or not shown in the drawing.

The processor 1010 executes instructions, codes, computer programs, or scripts that it might access from the network connectivity devices 1020, RAM 1030, ROM 1040, or secondary storage 1050 (which might include various disk-based systems such as hard disk, floppy disk, or optical disk). While only one processor 1010 is shown, multiple processors may be present. Thus, while instructions may be discussed as being executed by a processor, the instructions may be executed simultaneously, serially, or otherwise by one or multiple processors. The processor 1010 may be implemented as one or more CPU chips.

The network connectivity devices 1020 may take the form of modems, modem banks, Ethernet devices, universal serial bus (USB) interface devices, serial interfaces, token ring devices, fiber distributed data interface (FDDI) devices, wireless local area network (WLAN) devices, radio transceiver devices such as code division multiple access (CDMA) devices, global system for mobile communications (GSM) radio transceiver devices, worldwide interoperability for microwave access (WiMAX) devices, and/or other well-known devices for connecting to networks. These network connectivity devices 1020 may enable the processor 1010 to communicate with the Internet or one or more telecommunications networks or other networks from which the processor 1010 might receive information or to which the processor 1010 might output information.

The network connectivity devices 1020 might also include one or more transceiver components 1025 capable of transmitting and/or receiving data wirelessly in the form of electromagnetic waves, such as radio frequency signals or microwave frequency signals. Alternatively, the data may propagate in or on the surface of electrical conductors, in coaxial cables, in waveguides, in optical media such as optical fiber, or in other media. The transceiver component 1025 might include separate receiving and transmitting units or a single transceiver. Information transmitted or received by the transceiver 1025 may include data that has been processed by the processor 1010 or instructions that are to be executed by processor 1010. Such information may be received from and outputted to a network in the form, for example, of a computer data baseband signal or signal embodied in a carrier wave. The data may be ordered according to different sequences as may be desirable for either processing or generating the data or transmitting or receiving the data. The baseband signal, the signal embedded in the carrier wave, or other types of signals currently used or hereafter developed may be referred to as the transmission medium and may be generated according to several methods well known to one skilled in the art.

The RAM 1030 might be used to store volatile data and perhaps to store instructions that are executed by the processor 1010. The ROM 1040 is a non-volatile memory device that typically has a smaller memory capacity than the memory capacity of the secondary storage 1050. ROM 1040 might be used to store instructions and perhaps data that are read during execution of the instructions. Access to both RAM 1030 and ROM 1040 is typically faster than to secondary storage 1050. The secondary storage 1050 is typically comprised of one or more disk drives or tape drives and might be used for non-volatile storage of data or as an over-flow data storage device if RAM 1030 is not large enough to hold all working data. Secondary storage 1050 may be used to store programs that are loaded into RAM 1030 when such programs are selected for execution.

The I/O devices 1060 may include liquid crystal displays (LCDs), touch screen displays, keyboards, keypads, switches, dials, mice, track balls, voice recognizers, card readers, paper tape readers, printers, video monitors, or other well-known input/output devices. Also, the transceiver 1025 might be considered to be a component of the I/O devices 1060 instead of or in addition to being a component of the network connectivity devices 1020. Some or all of the I/O devices 1060 may be substantially similar to various components depicted in the previously described drawing of the MS 10, such as the display 702 and the input 704.

While several embodiments have been provided in the present disclosure, it should be understood that the disclosed systems and methods may be embodied in many other specific forms without departing from the scope of the present disclosure. The present examples are to be considered as illustrative and not restrictive, and the intention is not to be limited to the details given herein.

Also, techniques, systems, subsystems and methods described and illustrated in the various embodiments as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the scope disclosed herein.

## Claims

1. A method for a mobile station (10) to communicate with a wireless communications network (12), the method comprising:
monitoring, at the mobile station (10), a first subset of timeslots (60) of a set of timeslots designated for communication;
determining, from at least data associated with the first subset of timeslots (60), that timeslots not within the first subset of timeslots (60) had communications directed to the mobile station (10) associated therewith and were not monitored by the mobile station (10), by:
observing block sequence numbers (BSNs) associated with data received on at least the first subset of timeslots (60), and
identifying a BSN having a value at least one of greater than a BSN value expected by the mobile station (10) and out of sequence with previously received BSNs, and
monitoring, at the mobile station (10), a second subset of timeslots of the set of timeslots after said determining.

2. The method of claim 1, further comprising, upon determining that timeslots not within the first subset of timeslots (60) have communications associated therewith and are not being monitored by the mobile station (10), providing an indication (54, 58, 84, 88) to the wireless communications network (12) that the timeslots not within the first subset of timeslots (60) having communications associated therewith and are not being monitored by the mobile station (10).

3. The method of any of the preceding claims, wherein the set of timeslots consists of the first subset of timeslots (60) and the second subset of timeslots.

4. The method of claim 3, wherein the first subset of timeslots (60) includes timeslots only on a first carrier and the second subset of timeslots includes timeslots only on a second carrier.

5. The method of any of the preceding claims, wherein monitoring the first subset of the set of timeslots (60) designated for communication includes monitoring at least one timeslot during a subset of time division multiple access (TDMA) frames on which blocks addressed to the mobile station (10) could be transmitted.

6. The method of any of the preceding claims, wherein the first subset of timeslots (60) includes all timeslots on which control messages addressed to the mobile station (10) may be received.

7. A computer readable medium having stored instructions executed by a processor (802) of a mobile station (10) and causing the mobile station (10) to implement the method of any of the preceding claims.

8. A mobile station (10), comprising:
a processor (802) in communication with a memory (804), the memory (804) storing instructions, which when executed by the processor (802) cause the processor to perform the steps of:
monitoring a first subset of timeslots (60) of a set of timeslots designated for communication;
determining, from at least data associated with the first subset of timeslots (60), that timeslots not within the first subset of timeslots (60) had communications directed to the mobile station (10) associated therewith and were not monitored by the mobile station (10), by:
observing block sequence numbers (BSNs) associated with data received on at least the first subset of timeslots (60), and
identifying a BSN having a value at least one of greater than a BSN value expected by the mobile station (10) and out of sequence with previously received BSNs, and
monitoring, at the mobile station (10), a second subset of timeslots of the set of timeslots after said determining.

9. The mobile station (10) of claim 8, wherein the processor is configured to perform the step of, upon determining that timeslots not within the first subset of timeslots (60) have communications associated therewith and are not being monitored by the mobile station (10), providing an indication (54, 58, 84, 88) to the wireless communications network (12) that the timeslots not within the first subset of timeslots (60) having communications associated therewith and are not being monitored by the mobile station (10).

10. The mobile station (10) of any of claims 8-9, wherein the set of timeslots consists of the first subset of timeslots (60) and the second subset of timeslots.

11. The mobile station (10) of claim 10, wherein the first subset of timeslots (60) includes timeslots only on a first carrier and the second subset of timeslots includes timeslots only on a second carrier.

## Patentansprüche

1. Ein Verfahren für eine mobile Station (10) zum Kommunizieren mit einem drahtlosen Kommunikationsnetzwerk (12), wobei das Verfahren aufweist:
Überwachen, an der mobile Station (10), eines ersten Teilsatzes von Zeitschlitzen (60) aus einem Satz von Zeitschlitzen, der zur Kommunikation bestimmt ist;
Bestimmen aus zumindest Daten, die mit dem ersten Teilsatz von Zeitschlitzen (60) assoziiert sind, dass Zeitschlitze, die nicht innerhalb des ersten Teilsatzes von Zeitschlitzen (60) sind, Kommunikationen hatten, die an die damit assoziierte mobile Station (10) gerichtet waren, und durch die mobile Station (10) nicht überwacht wurden, durch:
Beobachten von Blocksequenznummern (BSNs - block sequence numbers), die mit Daten assoziiert sind, die auf zumindest dem ersten Teilsatz von Zeitschlitzen (60) empfangen werden, und
Identifizieren einer BSN mit einem Wert, der zumindest eines ist aus größer als ein BSN-Wert, der von der mobilen Station (10) erwartet
wird, und außer der Reihe zu zuvor empfangenen BSNs, und
Überwachen, an der mobilen Station (10), eines zweiten Teilsatzes von Zeitschlitzen aus dem Satz von Zeitschlitzen nach dem Bestimmen.

2. Das Verfahren gemäß Anspruch 1, das weiter aufweist, bei einem Bestimmen, dass Zeitschlitze, die nicht innerhalb des ersten Teilsatzes von Zeitschlitzen (60) sind, damit assoziierte Kommunikationen haben und durch die mobile Station (10) nicht überwacht werden, Vorsehen einer Angabe (54, 58, 84, 88) an das drahtlose Kommunikationsnetzwerk (12), dass die Zeitschlitze, die nicht innerhalb des ersten Teilsatzes von Zeitschlitzen (60) sind, damit assoziierte Kommunikationen haben und durch die mobile Station (10) nicht überwacht werden.

3. Das Verfahren gemäß einem der vorhergehenden Ansprüche, wobei der Satz von Zeitschlitzen aus dem ersten Teilsatz von Zeitschlitzen (60) und dem zweiten Teilsatz von Zeitschlitzen besteht.

4. Das Verfahren gemäß Anspruch 3, wobei der erste Teilsatz von Zeitschlitzen (60) Zeitschlitze nur auf einem ersten Träger umfasst und der zweite Teilsatz von Zeitschlitzen Zeitschlitze nur auf einem zweiten Träger umfasst.

5. Das Verfahren gemäß einem der vorhergehenden Ansprüche, wobei das Überwachen des ersten Teilsatzes des Satzes von Zeitschlitzen (60), der zur Kommunikation bestimmt ist, ein Überwachen zumindest eines Zeitschlitzes während eines Teilsatzes von TDMA(Time Division Multiple Access)-Rahmen umfasst, in dem an die mobile Station (10) adressierte Blöcke übertragen werden können.

6. Das Verfahren gemäß einem der vorhergehenden Ansprüche, wobei der erste Teilsatz von Zeitschlitzen (60) alle Zeitschlitze umfasst, in denen an die mobile Station (10) adressierte Steuernachrichten empfangen werden können.

7. Ein computerlesbares Medium mit gespeicherten Anweisungen, die durch einen Prozessor (802) einer mobilen Station (10) ausgeführt werden und veranlassen, dass die mobile Station (10) das Verfahren gemäß einem der vorhergehenden Ansprüche implementiert.

8. Eine mobile Station (10), die aufweist:
einen Prozessor (802) in Kommunikation mit einem Speicher (804), wobei der Speicher (804) Anweisungen speichert, die bei Ausführung durch den Prozessor (802) den Prozessor veranlassen, die Schritte auszuführen:
Überwachen eines ersten Teilsatzes von Zeitschlitzen (60) aus einem Satz von Zeitschlitzen, der zur Kommunikation bestimmt ist;
Bestimmen aus zumindest Daten, die mit dem ersten Teilsatz von Zeitschlitzen (60) assoziiert sind, dass Zeitschlitze, die nicht innerhalb des ersten Teilsatzes von Zeitschlitzen (60) sind, Kommunikationen hatten, die an die damit assoziierte mobile Station (10) gerichtet waren, und durch die mobile Station (10) nicht überwacht wurden, durch:
Beobachten von Blocksequenznummern (BSNs - block sequence numbers), die mit Daten assoziiert sind, die auf zumindest dem ersten Teilsatz von Zeitschlitzen (60) empfangen werden, und
Identifizieren einer BSN mit einem Wert, der zumindest eines ist aus größer als ein BSN-Wert, der von der mobilen Station (10) erwartet wird, und außer der Reihe zu zuvor empfangenen BSNs, und
Überwachen, an der mobilen Station (10), eines zweiten Teilsatzes von Zeitschlitzen aus dem Satz von Zeitschlitzen nach dem Bestimmen.

9. Die mobile Station (10) gemäß Anspruch 8, wobei der Prozessor konfiguriert ist, den Schritt durchzuführen, wenn bestimmt wird, dass Zeitschlitze, die nicht innerhalb des ersten Teilsatzes von Zeitschlitzen (60) sind, damit assoziierte Kommunikationen haben und durch die mobile Station (10) nicht überwacht werden, eines Vorsehens einer Angabe (54, 58, 84, 88) an das drahtlose Kommunikationsnetzwerk (12), dass die Zeitschlitze, die nicht innerhalb des ersten Teilsatzes von Zeitschlitzen (60) sind, damit assoziierte Kommunikationen haben und durch die mobile Station (10) nicht überwacht werden.

10. Die mobile Station (10) gemäß einem der Ansprüche 8-9, wobei der Satz von Zeitschlitzen aus dem ersten Teilsatz von Zeitschlitzen (60) und dem zweiten Teilsatz von Zeitschlitzen besteht.

11. Die mobile Station (10) gemäß Anspruch 10, wobei der erste Teilsatz von Zeitschlitzen (60) Zeitschlitze nur auf einem ersten Träger umfasst und der zweite Teilsatz von Zeitschlitzen Zeitschlitze nur auf einem zweiten Träger umfasst.

## Revendications

1. Procédé pour une station mobile (10) permettant la communication avec un réseau de communications sans fil (12), le procédé comprenant les étapes consistant à :
surveiller, au niveau de la station mobile (10), un premier sous-ensemble de créneaux temporels (60) parmi un ensemble de créneaux temporels désigné pour une communication ;
déterminer, au moins à partir de données associées au premier sous-ensemble de créneaux temporels (60), que des créneaux temporels ne faisant pas partie du premier sous-ensemble de créneaux temporels (60) ont eu des communications dirigées vers la station mobile (10) qui leur est associée et n'ont pas été surveillés par la station mobile (10), et ceci :
en observant des numéros de séquence de blocs (BSNs) associés à des données reçues dans au moins le premier sous-ensemble de créneaux temporels (60), et
en identifiant un numéro BSN ayant une valeur d'au moins une parmi les possibilités suivantes : supérieure à une valeur de numéro BSN attendue par la station mobile (10) et en dehors d'une séquence avec des BSNs précédemment reçus, et
surveiller, au niveau de la station mobile (10), un deuxième sous-ensemble de créneaux temporels parmi l'ensemble de créneaux temporels après ladite étape de détermination.

2. Procédé de la revendication 1, comprenant en outre, lors de la détermination que des créneaux temporels ne faisant pas partie du premier sous-ensemble de créneaux temporels (60) ont des communications qui leur sont associées et ne sont pas surveillés par la station mobile (10), le fait de fournir une indication (54, 58, 84, 88) au réseau de communications sans fil (12), spécifiant que les créneaux temporels ne faisant pas partie du premier sous-ensemble de créneaux temporels (60) ont des communications qui leur sont associées et ne sont pas surveillés par la station mobile (10).

3. Procédé de l'une quelconque des revendications précédentes, dans lequel l'ensemble de créneaux temporels est constitué du premier sous-ensemble de créneaux temporels (60) et du deuxième sous-ensemble de créneaux temporels.

4. Procédé de la revendication 3, dans lequel le premier sous-ensemble de créneaux temporels (60) comporte des créneaux temporels uniquement sur une première porteuse et le deuxième sous-ensemble de créneaux temporels comporte des créneaux temporels uniquement sur une deuxième porteuse.

5. Procédé de l'une quelconque des revendications précédentes, dans lequel une surveillance du premier sous-ensemble parmi l'ensemble de créneaux temporels (60) désigné pour une communication comporte la surveillance d'au moins un créneau temporel pendant un sous-ensemble de trames d'accès multiple par répartition dans le temps (TDMA) sur lequel des blocs adressés à la station mobile (10) pourraient être transmis.

6. Procédé selon l'une quelconque des revendications précédentes, dans lequel le premier sous-ensemble de créneaux temporels (60) comporte tous les créneaux temporels sur lesquels des messages de commande adressés à la station mobile (10) peuvent être reçus.

7. Support lisible par ordinateur ayant des instructions stockées qui sont exécutées par un processeur (802) d'une station mobile (10) et amenant la station mobile (10) à mettre en oeuvre le procédé de l'une quelconque des revendications précédentes.

8. Station mobile (10), comprenant :
un processeur (802) en communication avec une mémoire (804), la mémoire (804) stockant des instructions, qui lorsqu'elles sont exécutées par le processeur (802) amènent le processeur à effectuer les étapes qui consistent à :
surveiller un premier sous-ensemble de créneaux temporels (60) parmi un ensemble de créneaux temporels désigné pour une communication ;
déterminer, au moins à partir de données associées au premier sous-ensemble de créneaux temporels (60), que des créneaux temporels ne faisant pas partie du premier sous-ensemble de créneaux temporels (60) ont eu des communications dirigées vers la station mobile (10) qui leur est associée et n'ont pas été surveillés par la station mobile (10), et ceci :
en observant des numéros de séquence de blocs (BSNs) associés à des données reçues dans au moins le premier sous-ensemble de créneaux temporels (60), et
en identifiant un numéro BSN ayant une valeur d'au moins une parmi les possibilités suivantes : supérieure à une valeur de numéro BSN attendue par la station mobile (10) et en dehors d'une séquence avec des BSNs précédemment reçus, et
surveiller, au niveau de la station mobile (10), un deuxième sous-ensemble de créneaux temporels parmi l'ensemble de créneaux temporels après ladite étape de détermination.

9. Station mobile (10) de la revendication 8, dans laquelle le processeur est configuré pour effectuer l'étape consistant à, lors de la détermination que des créneaux temporels ne faisant pas partie du premier sous-ensemble de créneaux temporels (60) ont des communications qui leur sont associées et ne sont pas surveillés par la station mobile (10), fournir une indication (54, 58, 84, 88) au réseau de communications sans fil (12) spécifiant que les créneaux temporels ne faisant pas partie du premier sous-ensemble de créneaux temporels (60) ont des communications qui leur sont associées et ne sont pas surveillés par la station mobile (10).

10. Station mobile (10) de l'une quelconque des revendications 8 et 9, dans laquelle l'ensemble de créneaux temporels est constitué du premier sous-ensemble de créneaux temporels (60) et du deuxième sous-ensemble de créneaux temporels.

11. Station mobile (10) de la revendication 10, dans laquelle le premier sous-ensemble de créneaux temporels (60) comporte des créneaux temporels uniquement sur une première porteuse et le deuxième sous-ensemble de créneaux temporels comporte des créneaux temporels uniquement sur une deuxième porteuse.
